# EUROPEAN PATENT APPLICATION

(11) **EP 0 977 456 A2**
(43) Date of publication of application: **02.02.2000**
(21) Application number: 99111946.2
(22) Date of filing: 23.06.1999
(51) Int. Cl.: H04Q 11/04

(54) **Multiplexing system and control method therefor**

(30) Priority: 27.07.1998 US 94197 P; 03.11.1998 US 184640; 04.11.1998 US 185592
(71) Applicant: NEC CORPORATION, Tokyo (JP)
(72) Inventor: Dighe, Rajiv, Princeton, New Jersey 08540 (US); Biswas, Subir K., Princeton, New Jersey 08540 (US); Thirumalai, Vasanthi, Princeton, New Jersey 08540 (US); Watanabe, Kojiro, Princeton, New Jersey 08540 (US); Ramamurthy, Gopalakrishnan, Princeton, New Jersey 08540 (US)
(74) Representative: Baronetzky, Klaus, Dipl.-Ing.

(57) **Abstract**

In a multiplexing system for accessing an ATM network, line related functions are functionally separated from higher layer protocol related functions. The line related functions are performed by line interface card (LIF) and the higher layer protocol related functions are performed by universal interface card (UIF). The LIF is physically separated from the UIF to provide the functional separation.

## Description

The present invention generally relates to a multiplexing system for accessing an Asynchronous Transfer Mode (ATM) network and in particular to an ATM-based universal access multiplexer and a control method thereof.

Present-day communication edge devices have multiple physical interfaces attached thereto. Especially, a heterogeneous network needs to cater to them all. For each of these physical interfaces, several different protocols can be used. As can be readily appreciated by a skilled artisan, multiple technologies coupled with multiple protocols lead to a large number of configurations making it expensive to maintain this network.

Further, commercial chipsets for line level functions involving physical interfaces are cheaply available and sufficiently well designed. Therefore, line level functions can be performed with dedicated hardware without resorting to software implementations.

Several flexible access multiplexers that can incorporate any service on any port have been proposed. Sentient provides a well-known product that incorporates these features. In the approach used in Sentient, a special purpose VLSI protocol engine was developed to define a common set of functions for a variety of protocols such as Frame Relay (FR), Inverse Multiplexer, Point to Point Protocol (PPP) and Integrated Services Digital Network (ISDN). Further, a programmable element was provided to set the policies to enable different services on any given channel. However ,Sentient's design is based on one physical interface (channelized DS-3) and is hardware intensive (as many as 70 IC's had to be designed).

A different approach has also been followed by practitioners in the field. It consists of taking a well-known CPU such as MIPS core and adding a communications coprocessor to it. The communication coprocessor is optimized for specific communications related functions such as hunting for a pattern including High Level Datalink Control (HDLC) flags, bit stuffing/destuffing and Cyclic Redundancy Check (CRC) checks. However, the performance penalty in performing these low level functions using software is significant.

An object of the present invention is to provide a multiplexing system and a control method therefor, which can achieve an ATM-based universal access to an ATM network with simplified circuit configuration and improved performance.

Another object of the present invention is to provide a multiplexing system and a control method therefor, which can achieve an ATM-based universal access to an ATM network with the software-based autoconfiguration and provisioning capabilities.

According to the present invention, a multiplexing system for accessing an ATM network is characterized in that line related functions are functionally separated from higher layer protocol related functions.

The multiplexing system may include first interface means (LIF) performing the line related functions; and second interface means (UIF) performing the higher layer protocol related functions, wherein the first interface means is physically separated from the second interface means to provide a functional separation of the line and higher layer protocol related functions.

The first interface means may be at least one line interface card (LIF) and the second interface means may be at least one universal interface card (UIF), wherein all UIFs are of same type. The UIF has at least two different kinds of interfaces, wherein a first interface of a first kind is used to transfer ATM-based cells and a second interface of a second kind is used to transfer non-ATM-based data. The first interface provides a data path and the second interface provides a control path to a cell-based LIF, and that the second interface provides a data path and a control path to a non-cell-based LIF. More specifically, the first interface is a Universal Test and Operation Interface for ATM (UTOPIA) interface and the second interface is a Peripheral Component Interconnect (PCI) interface.

In a combination of a universal interface card (UIF) and at least one line interface card (LIF) which are used in multiplexing, wherein the LIF performs line related functions the UIF performs higher layer protocol related functions, the UIF is comprised of: interface means for detachably connecting the LIF thereto; and control means for auto-configuring the LIF by communicating with the LIF through the interface means when the LIF is plugged into the UIF.

According to the present invention, the multiplexing system is controlled by a set of messages communicating between the UIF and the LIF. A control method according to the present invention comprises the steps of: sending a first message from the LIF to the UIF at first; and sending a second message from the UIF to the LIF to make the LIF operational. The first message is a Hello message conveying the LIF identifier and enabling the UIF to download appropriate configuration files. The second message is a Configuration message containing provisioning information which is loaded onto the LIF to operate the LIF and the UIF.
Fig. 1 is a block diagram showing a conceptual architecture of an ATM access multiplexer according to the present invention;
Fig. 2 is a block diagram showing a system architecture of an ATM access multiplexer according to an embodiment of the present invention;
Fig. 3 is a block diagram showing a circuit configuration of a cell-based ADSL line interface card (LIF) for use in the ATM access multiplexer according to the present embodiment;
Fig. 4 is a block diagram showing a circuit configuration of a ADSL line interface card (LIF) with a modem bank for use in the ATM access multiplexer according to the present embodiment;
Fig. 5 is a block diagram showing a circuit configuration of a T1 line interface card (LIF) for use in the ATM access multiplexer according to the present embodiment;
Fig. 6 is a block diagram showing a circuit configuration of a T3 line interface card (LIF) for use in the ATM access multiplexer according to the present embodiment;
Fig. 7 is a block diagram showing a circuit configuration of a Ethernet line interface card (LIF) for use in the ATM access multiplexer according to the present embodiment;
Fig. 8 is a block diagram showing a circuit configuration of a universal interface card (UIF) for use in the ATM access multiplexer according to the present embodiment;
Fig. 9 is a block diagram showing a circuit configuration of a cell multiplexer for use in the ATM access multiplexer according to the present embodiment;
Fig. 10 is a diagram showing a sequence of exchanging messages between a LIF and a UIF for explanation of operations of an ATM access multiplexer according to the embodiment of the present invention;
Fig. 11 is a diagram showing an example of a general message format employed in the embodiment of the present invention;
Fig. 12 is a diagram showing an LIF Sub-ID field of the general message of Fig. 11;
Fig. 13 is a diagram showing an example of a Hello message employed in the embodiment;
Fig. 14 is a diagram showing an example of a configuration message for an ADSL line employed in the embodiment;
Fig. 15 is a diagram showing an example of a configuration message for a T1 line employed in the embodiment;
Fig. 16 is a diagram showing an example of a configuration message for a channelized T1 line employed in the embodiment;
Fig. 17 is a diagram showing an example of a line stabilization message employed in the embodiment;
Fig. 18 is a diagram showing an example of an identity remote message employed in the embodiment;
Fig. 19 is a diagram showing an example of an identity remote acknowledgement message employed in the embodiment;
Fig. 20 is a diagram showing an example of an reset remote message employed in the embodiment;
Fig. 21 is a diagram showing an example of a report statistics message employed in the embodiment;
Fig. 22 is a diagram showing an example of a report statistics acknowledgement message employed in the embodiment; and
Fig. 23 is a diagram showing an example of a loopback test message employed in the embodiment.

### CONCEPTUAL ARCHITECTURE

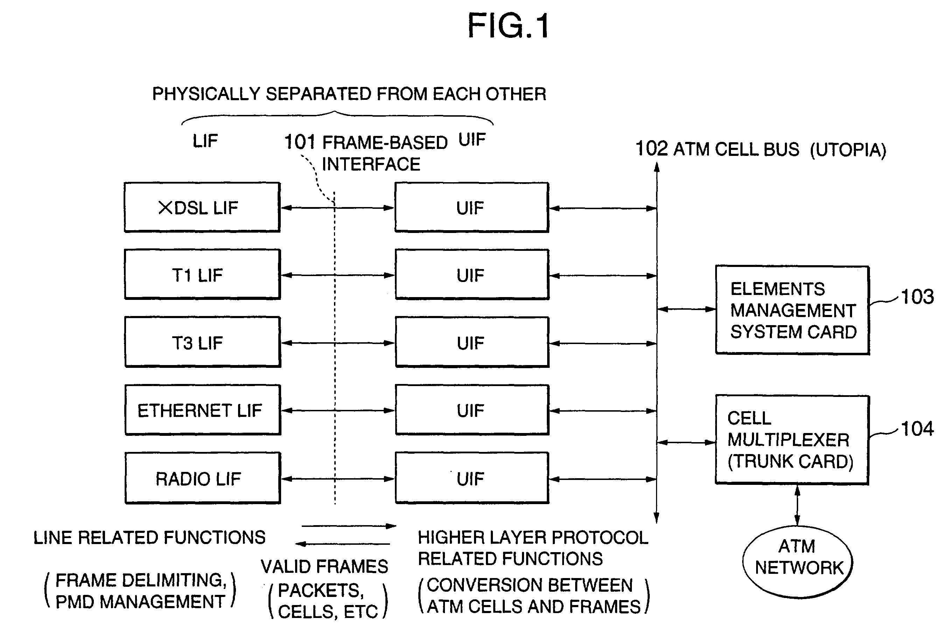

As shown in Fig. 1, the architecture of a multiplexing system based on the present invention incorporates a functional separation of line related functions and protocol related functions. Such a functional separation is accomplished by physically separating a set of line interface card (LIF) from a universal interface card (UIF) through a frame-based interface 101 that will be described later. All line related functions are done at the LIF while all higher level protocol related processing is done at the UIF.

All the UIFs are of the same type, while the structure of LIFs depend on the type of line technology used. The number of different LIFs that are provided depends on the technology available. Here, the followings may be included: T1 LIF, T3 LIF, Asymmetric Digital Subscriber Line (ADSL) LIF (CAP/DMT), HDSL LIF, ADSL-lite LIF, Ethernet LIF, Radio LIFs, 25Mb/s ATM LIF, and Cable Modem LIF. The Radio LIFs include global system for mobile communications (GSM), code division multiple access (CDMA), Wireless ATM, etc.

A skilled practitioner will understand that the present invention is not limited to the above list. LIFs based on technologies that will become available in future are also within the scope of this invention.

A common type of UIF is provided for all the LIFs. In a multiplexing operation, the LIF delimits valid frames including T1 frames, packets, cells, etc. The valid frames are then passed to the UIFs through the frame-based interface 101 such as UTOPIA (Universal Test and Operation Interface for ATM) or PCI (Peripheral Component Interconnect) interface.

All protocol processing is performed in the UIFs which converts frames to ATM cells before passing them to a cell multiplexer card 104 in the upstream direction and vice versa in the down stream direction through an ATM cell bus 102 or UTOPIA.

Similarly, in a demultiplexing operation, the cell multiplexer card 104 receives ATM cells from an ATM network and passes them to the UIF through the ATM cell bus 102. At the UIF, the received ATM cells are converted to frames and they are then passed to the LIF through the frame-based interface 101. Finally, they are converted to suit appropriate line technologies.

In Fig. 1, the respective LIFs are connected to UIFs. It should be noted that several instances of UIFs are used but they are all of the same type. The UIFs, an element manager card 103 and the cell multiplexer card 104 are connected to each other through the ATM cell bus 102 or UTOPIA. The element manager card 103 and the cell multiplexer card 104 will be described in detail later.

An advantage of this architecture is that customers can buy multiplexers without deciding the exact mix of line cards that need to be deployed. Furthermore, as the demand grows, customers can add and delete line interface cards and the system will auto-configure itself based on the changes. The mix of services being offered by such an architecture is also completely programmable and flexible. The mechanical arrangement of a platform embodying the present invention also allows for a stackable architecture allowing line interface cards and their corresponding modules to be added to the system in a modular fashion.

### PHYSICAL IMPLEMENTATION

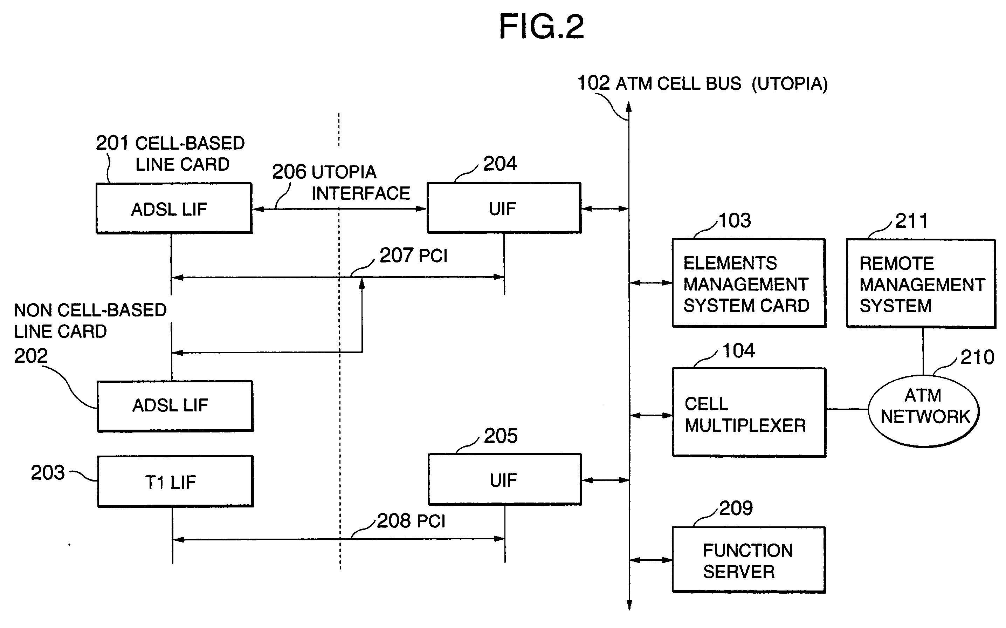

Referring to Fig. 2, for simplicity, it is assumed that a cell-based line card (ADSL LIF) 201 and a non-cell-based line card (ADSL LIF) 202 are connected to a UIF 204, and a T1 LIF 203 is connected to a UIF 205. Recognizing the usefulness of industry standard interfaces to couple a UIF and an LIF, and recognizing that both ATM-based cells and non ATM-based data arrive at the system, the UIF is designed to have two kinds of interfaces to couple with the LIF. These are the industry standard UTOPIA interface for a cell-based line card and a PCI interface for non cell-based line cards. The PCI bus also serves as a computer bus for interconnecting LIF processor with UIF processors.

The cell-based ADSL LIF 201 is connected to the UIF 204 through both a UTOPIA interface 206 for transfer of ATM-based cells and a PCI interface 207 for transfer of non ATM-based data. Through the PCI interface 207, the non-cell-based ADSL LIF 202 is connected to the UIF 204. The T1 LIF 203 is connected to the UIF 205 through a PCI interface 208.

To use the UIF resources in this embodiment efficiently, multiple LIFs are allowed to home in on a single UIF allowing each UIF to process about 100 Mb/s of data. However, a flexible software architecture allows additional processing power on each UIF by treating the entire system as a multiprocessor system with the ability to balance processing load on a traffic driven basis.

The element management system card 103, the cell multiplexer 104, and a function server 209 are attached to the ATM cell bus 102 or UTOPIA. The cell multiplexer 104 is connected to an ATM network 210. The element management system card 103 can be remotely managed using the remote management system 211.

The PCI bus standard is augmented to provide hot-swapping capability by using the compact PCI standard with special tristate-able line drivers using the Texas Instruments LVTH family. The features of this logic family that is important for the present invention are:
- Low power consumption;
- Power-up tristate for hot insertion;
- Tristate, when not driving the bus for a lower overall load;
- Fast propagation delays; and
- Bus hold logic that eliminates the need for pull-up resistors. Such a result is achieved by having the bus receivers continue to drive the bus weakly at the same state, as the last unit to drive the bus, until it detects another driver on the bus drive it with another signal.

The flexible universal access multiplexing system is organized in a hierarchical fashion. The element management system card 103 which maintains a master copy of all databases and memory-maps communicates with the UIF CPUs through the ATM cell bus using a dedicated PVC for interprocessor communications. The UIF CPU in turn communicates with individual LIF CPUs through the PCI interface so as not to reduce the UIF performance.

The following features may be incorporated on the above platform:
1) Autoconfiguration of LIFs when they get plugged into the UIF slots;
2) Dynamic protocol downloads on the UIF on a per session basis;
3) Downloads from the ATM network 210 through the element management system card 103;
4) Remote agents invocation on LIFs and UIFs; and
5) A distributed object architecture to allow load sharing and location independent processing.

When the cell-based ADSL LIF 201 is inserted and connected to the UIF 204, the cell-based ADSL LIF 201 is set to an operable state such that ATM-based cells are allowed to be transferred through the UTOPIA interface 206 between them. Then the non-cell-based ADSL LIF 202 is inserted and connected to the UIF 204, the non-cell-based ADSL LIF 202 is set to an operable state such that non ATM-based data are allowed to be transferred between them through the PCI interface 207. As described before, the PCI interface 207 is also used as a computer bus to interconnect two processors of the LIFs 201 and 202 with the processor of the UIF 204. Similarly, when the T1 LIF 203 is inserted and connected to the UIF 205, non ATM-based data are allowed to be transferred between them through the PCI interface 208. The PCI interface 208 is also used as a computer bus to interconnect the processor of the LIF 203 with the processor of the UIF 205.

As will be described later, to use such a flexible universal access multiplexing system efficiently, a set of messages is used to communicate between a LIF and a UIF.

### CELL-BASED LINE INTERFACE CARD

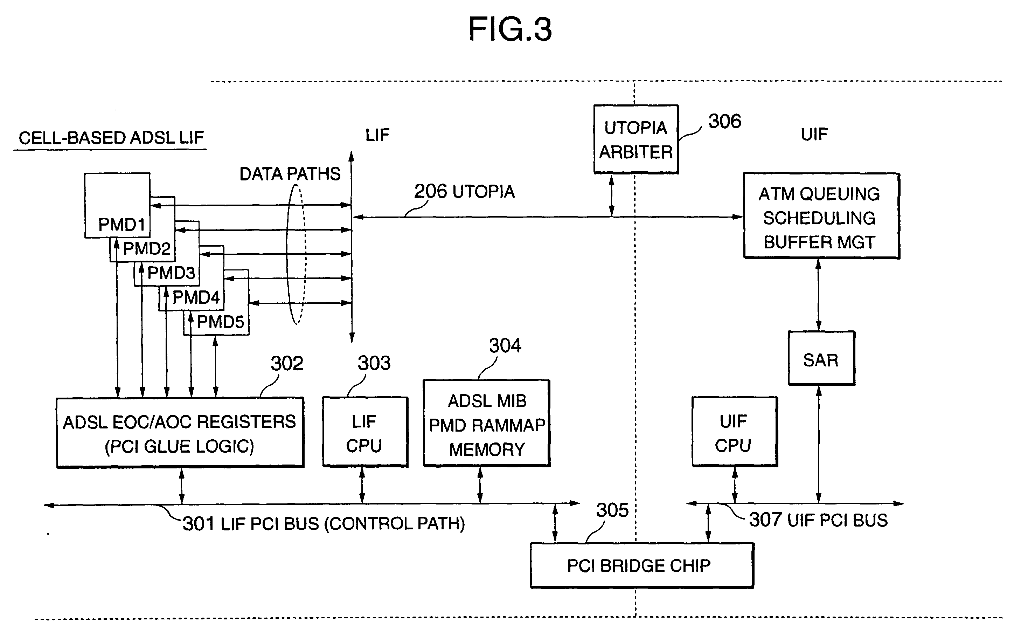

Referring to Fig. 3, a cell-based ADSL LIF has up to eight physical media dependent (PMD) components including Transmit and Receive. Five of these PMD1-PMD5 are shown in the figure. The PMD components PMD1-PMD5 are connected to ADSL EOC/AOC registers 302 and also to a Utopia bus 206 which is connected to a Utopia arbitor 306. An LIF PCI bus 301 connects the ADSL EOC/AOC registers 302, an LIF CPU 303, a memory 304, and a PCI bridge chip 305. The basic functions performed on this LIF are:
1) ADSL Transmit and Receive operations on a per line basis;
2) Cell transmission Convergence (TC)
3) Management of the individual ADSL lines;
4) Management of individual channels on each ADSL line (ASX0-7) with configurable dual/single mode operation; and
5) Alarm and statistics gathering on a per-line card basis.

The LIF CPU 303 communicates with the UIF through the PCI bus 301 and the PCI bridge chip 305. The present embodiment uses a Rate Adaptive DSL (RADSL). The LIF CPU 303 manages the embedded operations channel (EOC) channels on each line as well as the ADSL overhead channel (AOC). Since the ADSL transmission unit-central office (ATU-C) is expected to be the master in the ANSI specification (T1.413), the ADSL transmission unit-remote (ATU-R) state machines are managed and monitored by the digital subscriber link access multiplexer (DSLAM) using EOC messages.

A detailed set of EOC messages and the state machines maintained by the ADSL LIF module is described in V. Thirumalai and A. Kolarov, "Host-PMD Interface Control for DMT-PHY Chip". The LIF CPU 303 also manages the AOC bits in the ADSL frame which includes configuration and bit swapping information between the ATU-R and ATU-C.

The rates associated with each channel inside the ADSL frame is maintained by the LIF CPU 303. Such a dynamic rate adaptation (DRA) implies that a one-to-one correspondence is maintained between the rates associated with each ADSL subchannel (up to seven channels are permitted) and the UPC parameters maintained on a per VC basis by a UIF CPU. There are two reasons for using DRA:
1. the line conditions may have changed during a session; and
2. the network or application's requirements may have changed during a session.

A memory interface is maintained between the two CPUs, LIF CPU 303 and UIF CPU, through the PCI bus 207. Adding/deleting bandwidth to a given VC implies adding/deleting bandwidth to a given ASX channel on the ADSL line. This in turn may trigger a Dynamic Rate Adaptation procedure between the ATU-R and the ATU-C which has to be managed by the LIF CPU 303.

The granularity in bandwidth changes needed to trigger a DRA should be examined especially if available bit rate (ABR) traffic is supported. Every rate change should not trigger a DRA and every DRA (induced by line conditions for example) should not change the UPC parameters. At least a 32 Kb/s rate change granularity needs to be maintained but even this may be excessive. A line condition based rate change should let the LIF CPU 303 inform the UIF CPU of the changes and let the UIF CPU rearrange the bandwidth on the individual VCs. Similarly a change in UPC parameters or ABR rates at the VC level should be managed by the UIF CPU which informs the LIF CPU 303 of the necessary changes.

The actual DRA procedure between the ADSL transmission unit - remote (ATU-R) and the ADSL transmission unit - central office (ATU-C) is initiated by the LIF CPU 303. The mapping of VCs to ADSL subchannels is maintained by the UIF CPU as the LIF CPU 303 does not have any knowledge of VCs. The LIF Memory 304 contains a table that maintains the rate on each subchannel on each ADSL line. The table is read and written by both LIF CPU 303 and UIF CPU through the PCI bus.

### OAM Cell Handling

Line management signals between the ATU-R and ATU-C is communicated using either EOC/AOC channels or by using embedded ATM OAM Cells. Since ATM is terminated at the UIF and not the LIF, the UIF CPU processes the OAM cells and passes either the entire cell or makes a function call to the LIF CPU 303 to initiate the proper action. The first approach is simpler and does not involve distributed multiprocessing problems, but this approach pays the penalty of multihops through the CPUs. Since the PCI bus is a broadband bus, this may not be a problem.

### Modem Pooling

A critical component of how many ADSL physical media dependents (PMDs) that an LIF can support is related to the amount of power the ADSL modems consume. Initial estimates show CAP-based modem chips consuming close to 4W and DMT chips consuming about 10W. Thus, innovative power management schemes are needed at the LIF to maximize line density and minimize power. One scheme is to use the modem pooling technique, which allows multiple ADSL lines to reuse the same digital chips. This is done by inserting an analog crossbar switch between the analog front end and the digital backend that performs the signal processing.

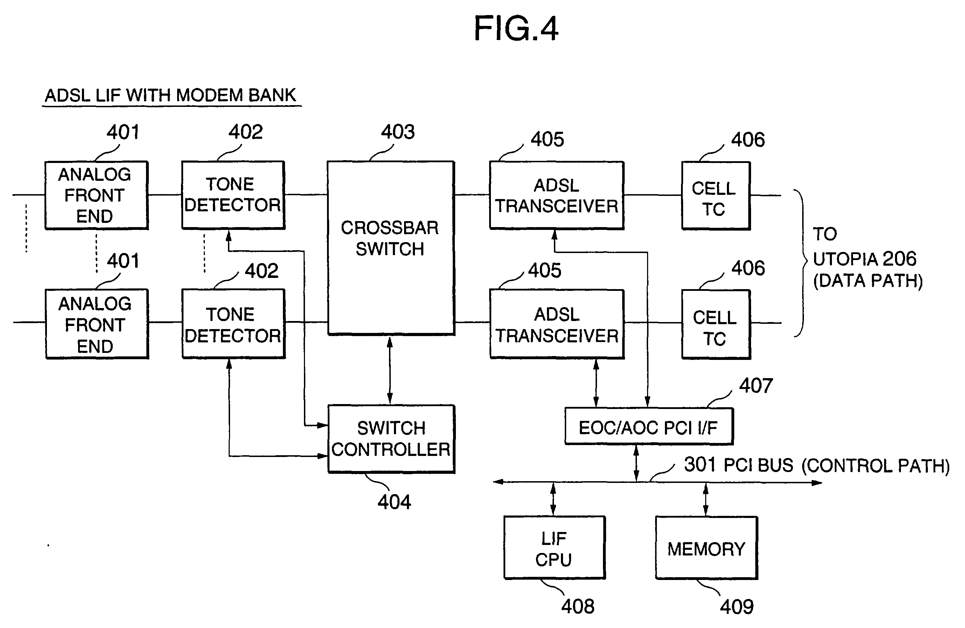

Referring to Fig. 4, there is shown an ADSL LIF with a modem bank. Multiple ADSL lines are connected through analog front ends 401 and tone detectors 402 to an analog crossbar switch 403 which is controlled by a switch controller 404 depending on tone detection signals received from tone detectors 402. The crossbar switch 403 is used to statistically multiplex the multiplex ADSL lines to a modem bank that performs all the digital operation. ADSL transceivers 405 are connected to the Utopia 206 through Cell TCs 406. The ADSL transceivers 405 are also connected to an ADSL EOC/AOC PCI interface 407 through which a LIF CPU 408 controls the ADSL transceivers 405. Here, an ADSL modem is a combination of an analog front end 401 and an ADSL transceiver 405.

In this scenario statistically multiplexing the multiple lines to the modem bank needs to be done by the LIF CPU 408. This involves maintaining the ADSL specific states (equalizer settings, SNR calculations, channel analysis as well as ADSL state machines) on a per line basis in memory 409 and downloading the correct state into the modem pool when the appropriate line is connected to the modem. The switching occurs under the control of the switch controller 404. Sleep mode operation is also possible between the ATU-R and ATU-C in this setup. Note that the tone detector 402 looks for the R-ACT-REQ tone from the ATU-R to enable operations (34.5 KHz tone with a certain timing pattern). The ATU-C will now block if all the modems at the ATU-C are in service. A continuous pattern of idle flags on the embedded operations channel/ADSL operation channel (EOC/AOC) will be used by the LIF CPU 408 to tear down a connection through the analog crossbar switch 403.

### T1 LINE INTERFACE CARD

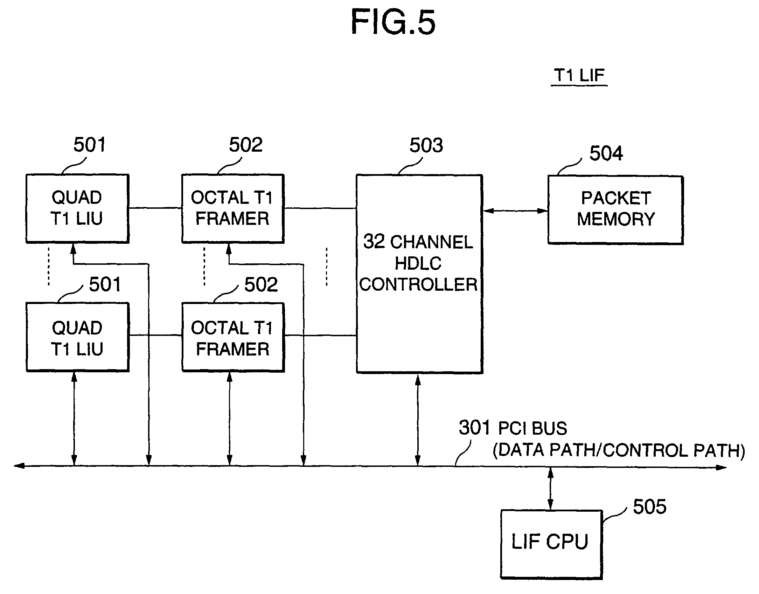

Referring to Fig. 5, a T1 LIF supports 32 T1 lines attached to Quad T1 Line Interface Units (LIUs) 501 which are in turn connected to a 32-channel HDLC controller 503 through Octet T1 Framers 502, respectively. A packet memory 504 is connected to the HDLC controller 503. The Quad T1 LIUs 501 and the Octet T1 Framers 502 are attached to the PCI bus 301.

The Octet T1 Framers 502 perform framing (including superframe and extended super frame), line coding, robbed bit signalling and alarm statistics gathering. The 32-channel HDLC controller 503 performs flag delineation, bit stuffing, CRC verification and length checking, time slot interchange, and transparent mode DS0 coupled with HDLS DS0. Packets are transferred through the PCI bus 301 to and from the UIF. A LIF CPU 505 is connected to the PCI bus 301 to control the above components to implement the following functions.

Some of the functions to be performed on the T1 LIF are as follow:
- Line delimiting of the T1 frame.
- 4.8 Kb/s supervisory channel handling.
- Line maintenance {LOF, Errored Seconds, far end bit error (FEBE), near end bit error (NEBE), etc.}.
- Robbed bit signaling message delimitation.
- D channel message delimitation.
- Frame delimiting for HDLC frames over T1.
- CES cell delimitation (packetize raw DSO streams into ATM cells with AAL handling being done on the UIF- note that the LIF needs information on the AAL type for each channel in this case).
- Trunk conditioning and loopback capability.
- The TSI also allows hooking (i.e. T1s can be groomed and send back to another T1 without having to go through to the ATM side).

### T3 LINE INTERFACE CARD

The T3 LIF supports one T3 channel. Again both channelized and unchannelized mode DS-3 are supported. Hardware support for HDLC bitstuffing and destuffing to delimit valid frames is supported.

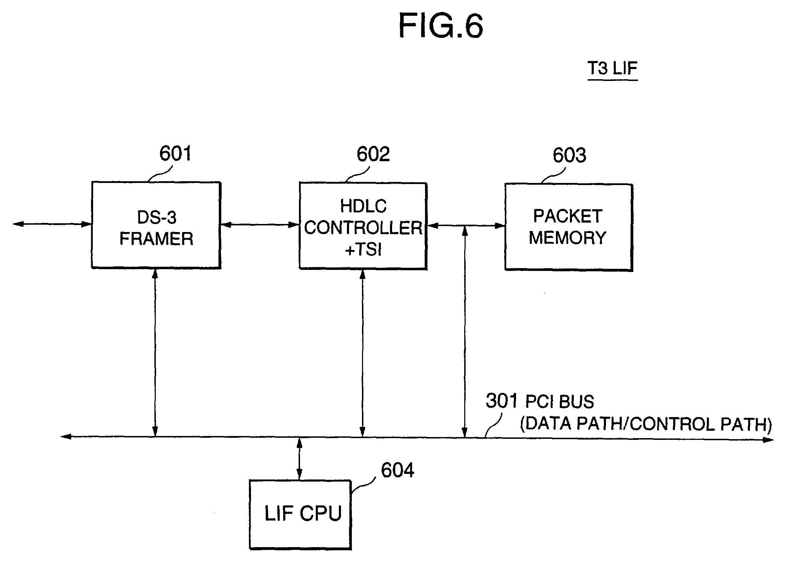

Referring to Fig. 6, there is shown a T3 LIF in an unchannelized DS-3 mode. A DS-3 framer 601 is connected to an HDLC controller 602 which is connected to a packet memory 603. The DS-3 framer 601, the HDLC controller 602 and the packet memory 603 are connected to the PCI bus 301 which is connected to an LIF CPU 604. Packets are transferred through the PCI bus 301 to and from the UIF. A LIF CPU 604 controls the above components to implement the following functions.

Some of the functions to be performed on the T3 LIF supporting DS-3 are as follows:
- T3 line delimiting functionality;
- Line maintenance capability;
- Capability for bit stuffing on T3 frame;
- D channel message delimitation capability;
- DS0 robbed bit signaling channel delimiting capability; and
- Frame delimiting of HDLC frames.

### ETHERNET LINE INTERFACE CARD

The Ethernet LIF is expected to terminate the Ethernet media access control (MAC) protocol. At least two types of Ethernet LIFs embody the present invention, for example, 10BaseT card and 100BaseT card. The 10BaseT card supports up to eight ethernet slots.

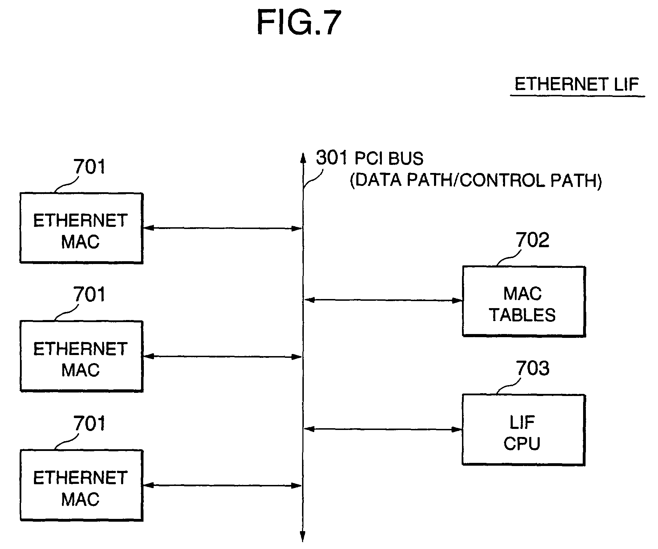

Referring to Fig. 7, MACs 701 are attached to a PCI bus 301. MAC tables 702 and an LIF CPU 703 are also attached to the PCI bus 301.

The functions to be performed on the ethernet LIFs are:
- manchester coding functionality;
- ethernet packet delimiting capability;
- media access control;
- ether switching capability;
- bridging functionality; and
- rate adaptation capability between UIF and LIF.

### RADIO LINE INTERFACE CARD

The global switching for mobiles (GSM) Card is based on the following premises:
1. LIF acts as the BSC.
2. LIF connects to a number of BTSs which actually runs the Radio link protocol.

The Functions provided by Radio LIF are:
a. Radio channel setup.
b. Frequency Hopping.
c. Handovers.

The UIF communicates with the mobile switching center (MSC) for the following:
a. Registration.
b. Authentication.
c. Location updating.
d. Handovers.
e. Call routing (Roaming support).

The UIF also provides SS7 support. The LIF is capable of extracting the slow associated control channel (SACCH) information from the traffic channels in the time division multiplex access (TDMA) frames. The LIF also performs internal HO, i.e., time-slot switching and BTS switching. The LIF and the UIF coordinate and handle the following control channels:
a. Broadcast channels (BCCH).
b. Frequency correction channel.
c. Random Access Channel.
d. Paging Channel.
e. Access Grant Channel.

The UIF plays a role in communication management and call control.

### OC-3 LINE INTERFACE CARD

The OC-3 LIF terminates SONET framing and provides either channelized or unchannelized data to the UIF. This enables STM traffic to be brought into the access multiplexer which can then be converted to ATM. IP over SONET can be efficiently carried in this arrangement wherein SONET is terminated as the LIF and IP packets are passed to the UIF using time slot channelization information the IP termination is done on the UIF from where it is transmitted to the network using a variety of IP over ATM schemes. The LIF also provides support for SONET ADM capability.

### UNIVERSAL INTERFACE CARD

As described before, the flexible universal access multiplexer according to the present invention is provided with the following capabilities:
- Plug and Play Line Interface Cards with hot swap capability;
- Software-based autoconfiguration and provisioning;
- Per session or per port protocol download capability (Any Service Any Session/Port);
- Ability to remote agents and allow control load sharing/balancing;
- Software architecture to allow multiple administrative entities to manage the multiplexer with security features;
- Advanced networking features such as Virtual Private Networks, Virtual Service Creation and N:1 push-based network diagnosing services; and
- Full layer 3 termination for multiple protocol stacks (IP, ATM, PPP, FR, etc.).

To meet the above requirements without complication of design or reduction in performance, a UIF is physically separated from an LIF to provide a functional separation between line related functions performed by the LIF and higher layer protocol related functions performed by the UIF. It should be noted that all UIFs are of same type while all LIFs may be of different types as described in Figs. 3-7.

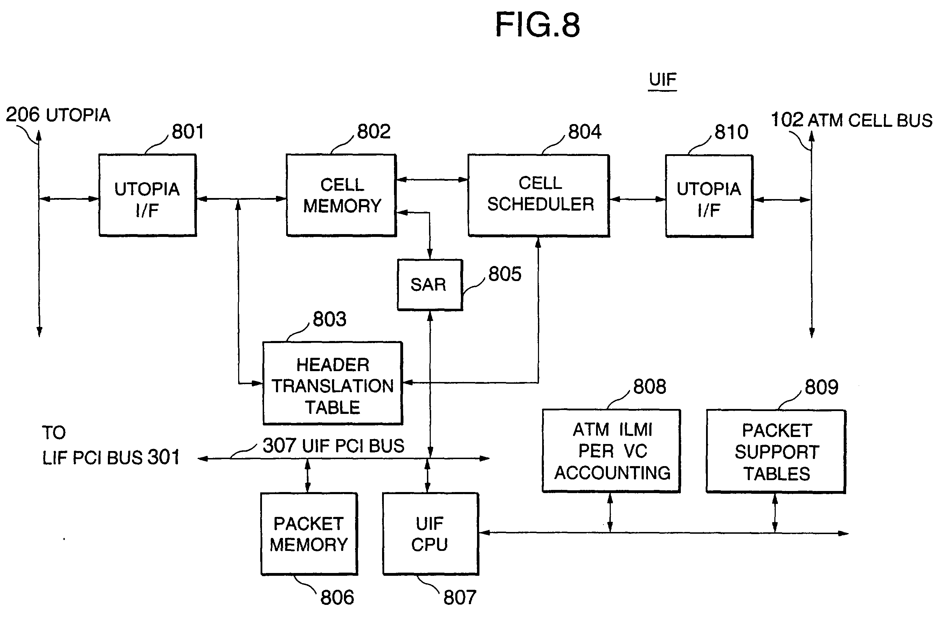

Referring to Fig. 8, the UIF is provided with a Utopia interface 801 which can be connected to a cell-based LIF through the UTOPIA 206. The Utopia interface 801 is connected to a cell memory 802 and a header translation table 803. The UIF includes a cell scheduler 804, a Segmentation and Reassembly (SAR) section 805, and a packet memory 806.

Packets received from frame-based LIFs through the PCI bus are stored in the packet memory 806. The SAR section 805 segments the packets stored in the packet memory 806 into cells and stores the cells onto the cell memory 802. Conversely, cells received from the ATM cell bus 102 are stored onto the cell memory 802. Then, the SAR section 805 reassembles packets from the received cells and the packets are transferred to the frame-based LIFs through the PCI bus. In the case of cell-based LIFs, outgoing and incoming cells are transferred through the Utopia interface 801. The header translation table 803 provides necessary information to determine the outgoing VPI/VCI for the cells coming in through the cell-based Utopia interface 801 or through another Utopia interface 810. These operations are controlled by a UIF CPU 807 using Integrated Local Management Interface per VC Accounting section 808 and packet support tables 809.

### Autoconfiguration

When the LIF is plugged into the PCI slot of the UIF, the UIF autoconfigures the LIF. The UIF obtains the following information from the LIF:
1) Line Protocol on the LIF.
2) The data path, whether cell based through utopia 206 or frame based through PCI bus 307.
3) The protocol stack that needs to be downloaded for using this LIF. Some of the choices for the protocol stacks are:
   - Frame Relay Over ATM. See The Frame Relay Forum, "Frame Relay/ ATM PVC Service interworking Implementation Agreement", FRF.8, April 1995; and The Frame Relay Forum, "Frame Relay/ATM PVC network interworking Implementation Agreement", FRF.5, December 1994.
   - PPP over ATM. *See* RFC 2364, PPP Over AAL5, July 1998;
   - IP over ATM (RFC 1577, 1483). *See* M.Laubach., "Classical IP and ARP Over ATM", RFC 1577, January 1994; and Heinanen.J., "Multiprotocol Interconnect Over AAL5", RFC 1483, July 1993.
   - IP over ATM using MPOA. See Multiprotocol Over ATM Version 1.0, The ATM Forum, July 1997;
   - IP over ATM using IP switching {Ipsilon, Tag, aggregate route based IP switching (ARIS), cell-switched routing (CSR), Ipsofacto}. *See* RFC 1953, "Ipsilon Flow Management Protocol Specification for IPv4, Version 1.0," May 1996; Y.Rekhter et al., "Cisco Systems' tag switching architecture overview," IETF RFC 2105, Feb. 1997; R.Woundy, "ARIS: Aggregate route-based IP switching," IETF Internet Draft, draft-woundy-aris-ipswitching-00.txt, Nov. 1996; Y.Katsube, K Nagami, and H Esaki, "Toshiba's router architecture extensions for ATM: Overview," IETF RFC 2098, Feb. 1997; and A. Acharya, R. Dighe, F. Ansari, "IPSOFACTO: IP switching over fast ATM cell transport," IETF Internet Draft, draft-acharya-ipsw-fast-cell-00.txt, July 1997.
   - ATM Inverse Multiplexing. *See* Inverse Multiplexing for ATM (IMA) specification version 1.0, The ATM Forum, July 1997.
   - Circuit Emulation Protocol over ATM. *See* Circuit Emulation Service Interoperability Specification Version 2.0, The ATM Forum, January 1997.
   - Native ATM. *See* Native ATM Services: Semantic Description Version 1.0, The ATM Forum, February 1996.
   - VTOA. *See* Voice and Telephony Over ATM- ATM Trunking using AAL1 for Narrowband Services version 1.0, The ATM Forum, July 1997
   - Radio Technologies such as GSM over ATM

There are two different scenarios for the automatically downloading protocol on the UIF.
1. There is no signaling channel between the LIF and the customer premises equipment (CPE).
2. There exists a signaling channel between the LIF and the CPE.

It is to be noted that the signaling referred to here is not the traditional signaling associated with call setup and teardown but signaling related to associating a protocol stack with a given ATM VC.

In the first case, it is assumed that a higher entity (like an NMS or a service order) has already stored protocol stack information on a per channel basis which can be used by the UIF for customizing protocol stacks on a per session basis. Note that higher level agents using languages like CORBA (Common Object Request Broker Architecture) are also able to make the changes needed to the UIF configuration registers through the element management system card 103.

In the second case, the signaling mechanism can be explicit or implicit. In explicit signaling, a well-know channel on the LIF/CPE link carries these messages while in the implicit case, channels (VCs/DLCIs/Slots) are partitioned to different protocol stacks. This channel partitioning is negotiated using Hello messages between the LIF and the CPE. If the signaling is explicit, a signaling channel is specified on the link between the CPE and the LIF. If the link supports ATM, then a PVC is used to carry the protocol specific information between the CPE and the Mutiplexer. The signaling PVC that is to carry user network interface (UNI) signaling (VP=0, VC=5), specifically the codeset 7 (User Specific IEs (Information Elements)), can be used to indicate a nonstandard signaling message.

A similar signaling channel can also be carved out of a T1 link by using the robbed bit signaling channel or a FR PVC or the D channel on a PRI and using the user specific PID. The signaling message carries information on the protocol to be used and will carry a protocol id field in it. The LIF needs to store the signaling messages in a specific address location on its packet memory and inform the UIF about the location when it is plugged in.

In the case that the link between the LIF/CPE actually has a standard signaling channel (ISDN, FR, Robbed bit, ATM UNI), the signaling message is extracted by the LIF and passed to the UIF using the aforementioned signaling location. The UIF terminates the signaling and translates it to the relevant signaling format for further transmission down the network based on the protocol stack that is relevant for the VC.

### ATM Cell Level Functions

The UIF performs all the ATM level functions. This includes cell scheduling as well as per VC queuing performed by the cell scheduler 804. Multiclass support is assumed so the UIF terminates available bit rate (ABR) and processes resource management (RN) cells. Scheduling algorithm such as weighted round robin or strict priority or deadline scheduling is programmable. Packet level support performed by the Packet Support Tables 809 includes per flow queuing as well as various packet discard schemes {early packet discard (EPD), partial packet discard (PPD), random early discard (RED)}.

Shaping and policing functions are also performed. VC merge is an optional feature that needs hardware support for packet based scheduling. The SAR functions will also provide multi AAL support (AAL5, AAL1 and AAL2) for the different application types. This information needs to be provided on a per VC basis during the autoconfiguration stage or can be updated as VCs are set up on a call by call basis.

### Higher Level Functions:

The protocol stacks listed above is supported on the UIF in a modular downloadable fashion. The entire ATM signaling stack (UNI 4.0, PNNI 1.0) is downloaded on the UIF if needed. The IP protocol stack {internet gateway management protocol (IGMP), internet control management protocol (ICMP), resource reservation protocol (RSVP), border gateway protocol (BGP), open switch path first (OSPF), RIP, distance vector multicast routing (DVMRP) etc.} is downloaded on the UIF CPU 807 or kept on a separate function server card 209. A modest size IP table look up cache 809 is maintained on the UIF CPU 807. Flow id tables can be carved out from the system memory if IP switching schemes based protocol stacks are being used on a given UIF. The L3/L2 binding hardware is supported on the UIF. This takes a L3 address and pops out a L2 VC for that given address. The same hardware could be used for MPOA and other IP switching schemes. Based on the MPLS requirements, a 20-bit lookup table may be needed on the UIF.

### Higher Level Remote Agents:

The UIF is also expected to support remote Jave/Corba agents from remote agents. The typical functions that these agents need to perform are:
- Filtering Operations.
- Security Operations including encryption and decryption.
- Collecting Billing Data.
- Packing a specific VC to start a debug trace.
- Invoking a specific mobility support algorithms such as hand off support and location management.

### Database Support:

The UIF maintains a copy of the interim link management interface (ILMI) and the ATMMIB database 808. Other database support for IP switching schemes is also supported. The UIF allows both simple network management protocol (SNMP) and common management information protocol (CMIP) agents to query these databases.

### ELEMENTS MANAGEMENT SYSTEM CARD

The elements management system card 103 is the master controller of the universal access multiplexer. A CORBA ORB will resides on this card. This card maintains master copies of all the databases as well as configuration and billing information. The element management card communicates with the UIFs using ATM PVCs. It also has CORBA-based PVC setup with remote network servers and databases. The elements management system (EMS) is expected to be carrier-ready and needs to support TMN interfaces to Operation Support Systems. It needs an X.25 interface to provide support for SS7 (Signaling System 7)-based systems.

### CELL MULTIPLEXER

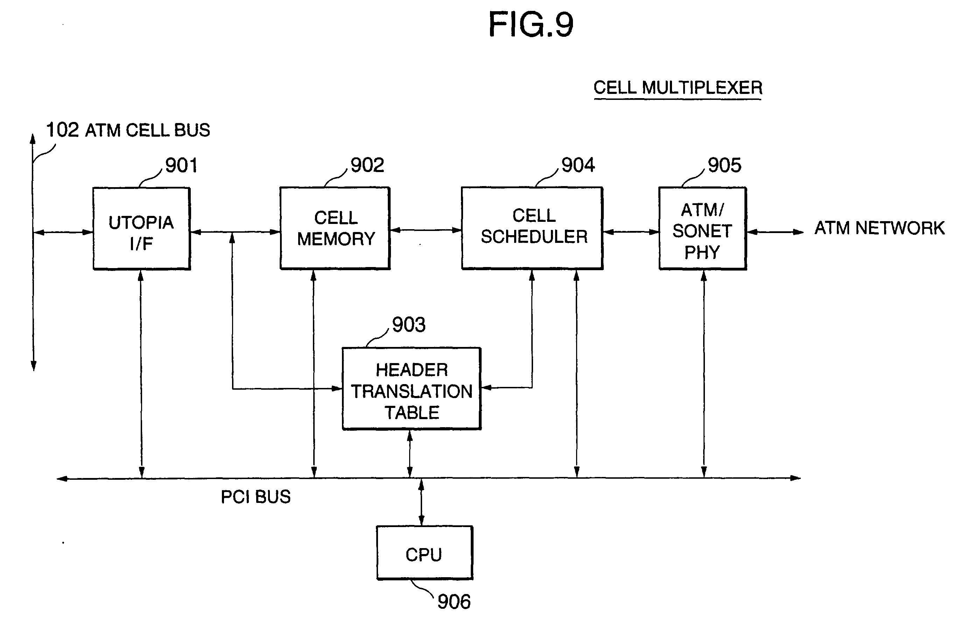

As shown in Fig. 9, the cell multiplexer 104 provides the trunk side interface to the central office. The cell multiplexer 104 is provided with a Utopia interface 901 connected to the ATM cell bus 102. The Utopia interface 901 is connected to a cell memory 902 and a header translation table 903. The cell multiplexer 104 further includes a cell scheduler 904 and an ATM/SONET physical interface 905. The ATM/SONET physical interface 905 provides the hardware interface to the trunk on the uplink side.

The cell multiplexer 104 is powered by a powerful RISC processor 906. NNI support (broadband inter carrier interface (BICI), broadband ISDN user path (BISUP), private NNI(PNNI)) is provided here. Some VC merge support also is provided here.

### FUNCTION SERVER CARD

Layer 3 processing is offloaded to the function server card 209. This allows IP route lookups in case of cache misses as well as MPOA client function and some of the IP switching functions to be performed here. PNNI is also supported here.

### OPERATION

For using the flexible universal access multiplexing system as described above efficiently, a set of messages is required. An example of message communications sequence will be described hereinafter.

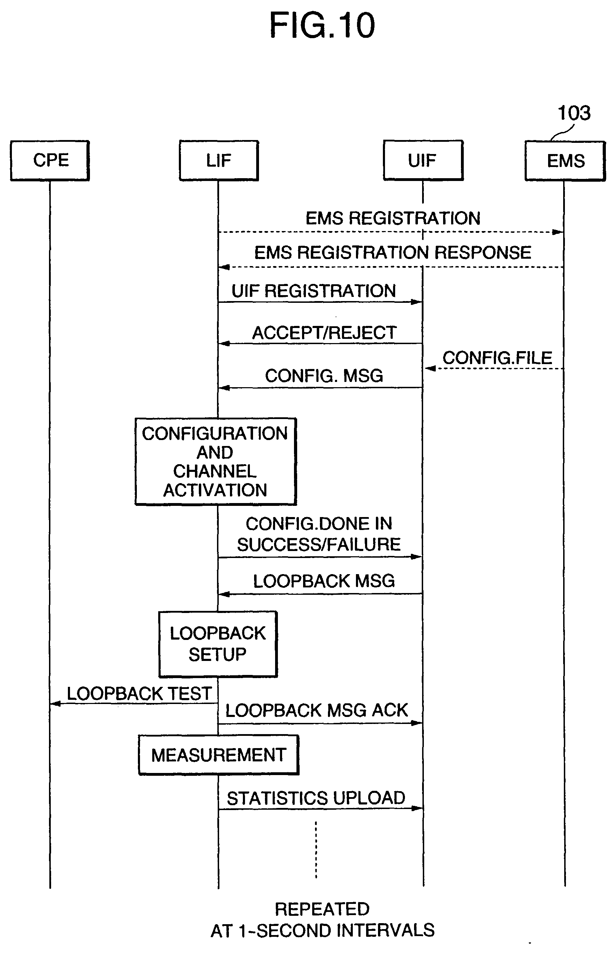

Referring to Fig. 10, when a LIF is plugged into a UIF, the LIF makes a registration request to the elements management system (EMS) card 103. When the LIF has been registered in the EMS card 103, a registration response is sent back to the LIF.

When receiving the registration response from the EMS card 103, the LIF makes a registration request to the UIF using a Hello message as will be described later. The UIF determines whether the connected LIF is acceptable or not in response to the registration request and sends the result (accept or reject) to the LIF. If the LIF is acceptable, the UIF sends the LIF a configuration message conveying the correct configuration files to support the LIF, which have been downloaded from the EMS card 103.

On successful completion of the configuration, the LIF sends a configuration success/failure message back to the UIF. After the channel activation has been successfully completed and established the link with the remote CPE, the UIF identifies the remote CPE using line stabilization, identify remote and identify remote acknowledgement messages as will be described later and then sends a loopback message to the LIF. The loopback message causes the LIF to set up the loopback test. The LIF sends an acknowledgement of the loopback message to the UIF and starts measurement. The collected statistics are sent by the LIF to the UIF in response to the request of the UIF. The statistics are reported to the UIF at predetermined intervals (here, every 1 second).

The details of a set of messages for use in the system will be described hereinafter.

### MESSAGE SETS

### 1. General Message Format

All the messages that are exchanged between the LIF and the UIF have the same format. Each message has a header followed by the contents of the message. The header has an LIF identifier and the message type. The message content is a variable number of data fields. The exact number of the data fields and their contents depends on the message header.

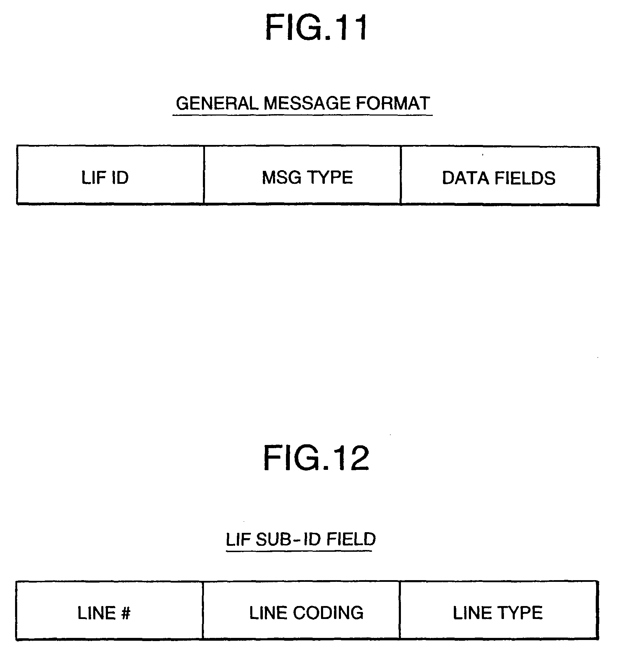

Referring to Fig. 11, an example of a general format for a message is shown. The present invention is not limited to any specific number of bytes allocated for each of the fields.

The LIF ID is further classified into sub-fields namely PHY ID and the Protocol ID. The PHY ID is typically one of:
- xDSL (ADSL, ADSL-lite, HDSL-2, VDSL etc.)
- T1
- T3
- Ethernet (10 BaseT, 100 BaseT)
- Radio cards (GSM, CDMA, IAS-54 etc.)

The Protocol ID specifies whether the data path is cell-based or frame-based (UTOPIA or PCI). A line specific protocol sub ID is also provided. For the ADSL line card, the protocol sub ID can be used to specify the line ID, line coding (DMT, CAP, QAM) and line type (FAST, INTERLEAVED etc.). The number of lines that are being supported on the line card is also conveyed in the LIF ID.

A typical example of the LIF Sub-ID field looks like as shown in Fig. 12. A special code point needs to be defined on the Line # field to indicate it applies to all lines on an LIF.

### 2. Hello Message (LIF → UIF)

A hello message is the first message that is sent by the LIF to the UIF. This message is common for all LIFs.

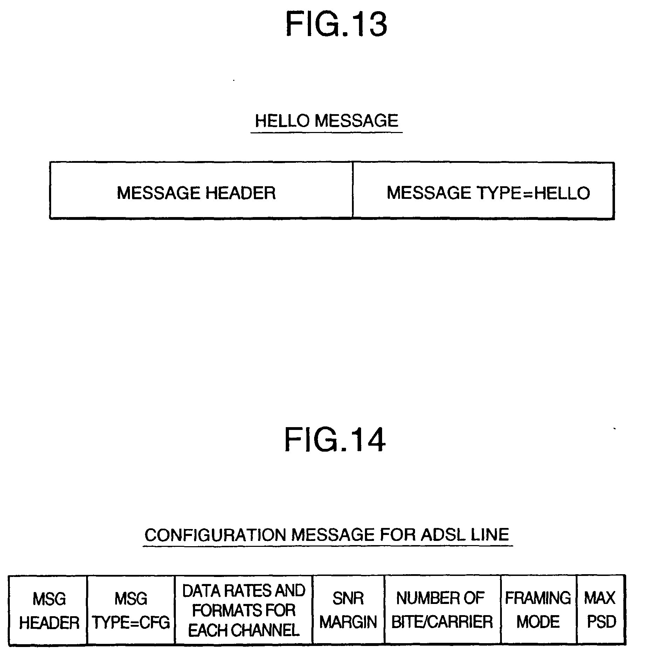

Referring to Fig. 13, an example of the format of a hello message is shown. The message type for the hello message is not limited by this invention. The Hello message conveys the LIF ID to the UIF and enables the UIF to download the correct configuration files to support the LIF from the element management card.

### 3. Configuration Message (UIF → LIF)

The configuration message will vary from LIF to LIF but typically contains provisioning information that needs to be loaded onto the LIF tables to make the LIF operational.

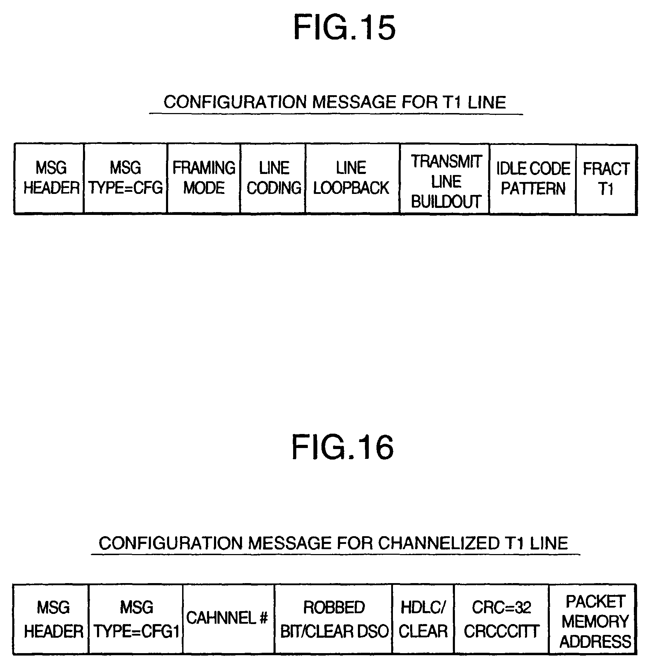

Fig. 14 shows the typical configuration message that one may see for an ADSL LIF and Fig. 15 shows the configuration message for the T1 line card on the other hand.

The fields in the above message are:
Framing Mode= Superframe, Extended Superframe & Unframed mode
Line Coding= B8ZS/AMI
Line Loopback= Enabled/Disabled
Transmit Line Built Out= 0,7.5d B, 15 dB or 22.5 dB programmable.
Idle Code Pattern= Customizable Idle code generation (this can be used for metasignaling)
Fractional T1= Enabled/Disabled. If enabled, idle DS0 slots used to ensure T1's density.

In the case of channelized T1, further configuration messages need to be sent from the UIF to the LIF on a DS0 basis. An example of such a message format is shown in Fig. 16.

Again for a T3 card one more level of CFG message (D53, DS 1, DSO etc) is provided. The UIF downloads this information to the LIF from an NMS entity before the LIF can start a dialogue with the remote. Hence the time to download these messages to the LIF is critical.

### 4. Line Stabilization Message (LIF → UIF)

On successful completion of the channel activation or initialization procedure, the LIF sends this message to the UIF. This is an indication to the UIF that the LIF has established the link with the remote and it is ready to perform measurements both at the local and the remote ends. Only after this message is received can the UIF issue any following messages. The format of this message will vary from LIF to LIF but for the ADSL LIF.

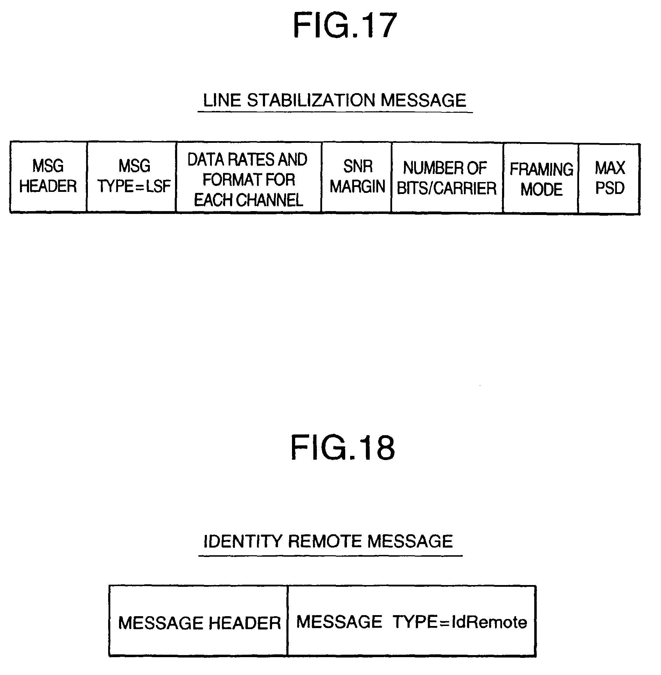

Referring to Fig. 17, an example for the line stabilization message format is shown. The data field types, SNR margins etc. are all the fields that have been agreed upon between the local and the remote during the channel initialization and activation phase.

### 5. Identify Remote Message (UIF → LIF)

In Fig. 18, an example of the Identify Remote massege is shown. The UIF requests details about a remote using this message. This message does not have any data fields except the line number on the LIF.

### 6. Identify Remote Ack Message (LIF → UIF)

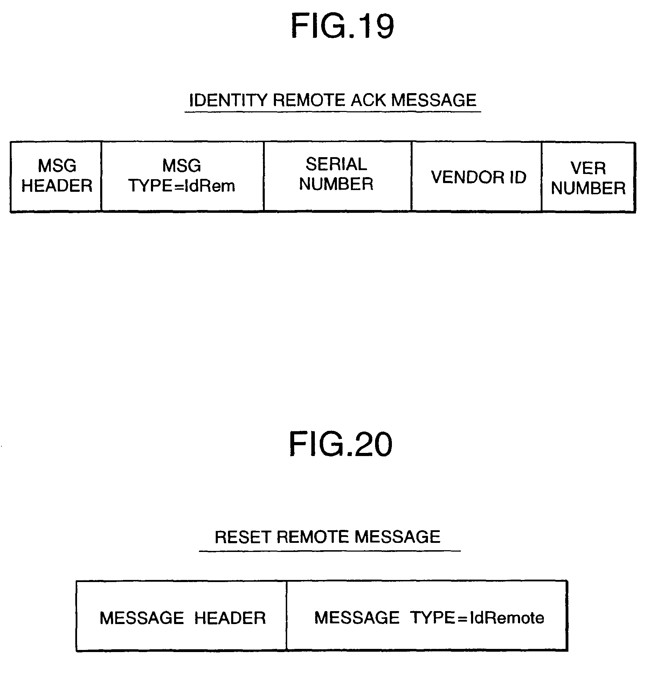

In Fig. 19, An example of the Identify Remote acknowledgement message is shown. It is assumed that the LIF maintains a local copy of the remote's identity. If not it shall probe the remote and get the identity. The LIF passes this identity information in this message.

### 7. Reset Remote Message (UIF → LIF)

In Fig. 20, an example of this message is shown. This message allows the UIF the means to reset a remote. It is assumed that the LIF has the ability command a remote reset. This message does not have any data fields except for the line card number on the LIF.

### 8. Report Statistics Message (UIF → LIF)

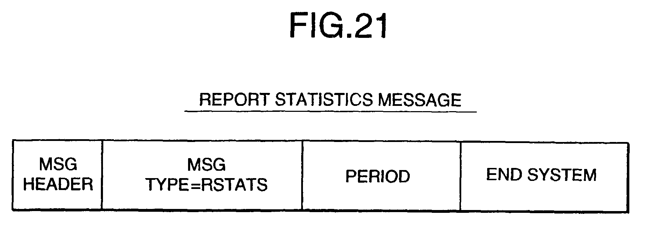

In Fig. 21, an example of the report statistics message is shown. The UIF requests collected statistics of the local and remote from the LIF through this message. The period refers to the time period of interest over which statistics are to be collected. The granularity of this period is predetermined. The End System refers to whether the UIF desires local or remote statistics.

### 9. Report Statistics Ack Message (LIP → UIF)

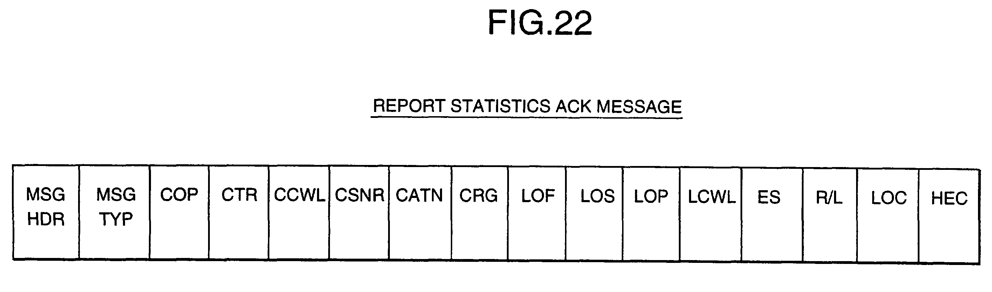

In Fig. 22, the format for the ADSL LIF report statistics acknowledgement message is shown. The LIF maintains statistics of the local and remote end measured over specific intervals. The format will vary from LIF to LIF.

The details of the above fields are given below:
COP= Current Output Power (dBs)
CTR= Current Transmit Power (dBs)
CCWL= Current Code Word Length
CSNR= Current Signal to Noise Ratio
CATN= Current Attenuation
CRG= Current Receive Gain
LOF= Loss of Frame Counter (reset on reads?)
LOS= Loss of Signal Counter (reset on reads?)
LOP= Loss of Power Counter (reset on reads?)
LCWL= Loss of code word length counter
ES= Errored Seconds
LOC= Loss of Cell Delineation counter
HEC= Header Check Errors counter.

There will also be counters for IDLE and UNASSIGNED Cells that have been discarded during a certain period. A similar statistical message can be passed for other LIFs such as T1.

### 10. Loopback Test Message (UIF → LIF)

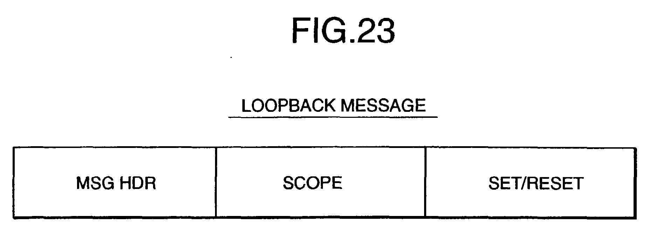

In Fig. 23, an example of the loopback message is shown. The UIF can initiate loopback tests between the LIF and the remote. The loopback tests can be at various levels (F3, F4, F5 etc.). The UIF can initiate a loopback procedure all the way up to the remote (CPE) through the LIF. The procedure is started by the Loopback message. The 'Scope' above defines the point at which the loopback should occur. 'Set' initiates a loopback and 'Reset' terminates it.

Once a Loopback is initiated all further cells/frames are to be looped back at the point specified by the previous loopback message.

### 11. Dynamic Rate Adaptation and Flow control

Explicit backoff messages between the LIF and the UIF in order to minimize buffer overflows on the packet memory is provided. The details of the messages depends on the specific flow control mechanism between the LIF and the CPE. A simple XON/XOFF flow control mechanism will be effective for the Ethernet line card.

### 12. Messages between EMS card and UIF

The mechanism for message exchange between the UIF and the Elements Manager is probably going to be procedure calls using either remote procedure call (RPC) or some form of interprocess communication (IPC).

Other modifications and variations to the invention will be apparent to those skilled in the art from the foregoing disclosure and teachings. Thus, while only certain embodiments of the invention have been specifically described herein, it will be apparent that numerous modifications may be made thereto without departing from the spirit and scope of the invention.

## Claims

1. A multiplexing system for accessing an ATM network (210), characterized in that line related functions are functionally separated from higher layer protocol related functions.

2. The multiplexing system according to claim 1, characterized by:
first interface means (LIF) performing the line related functions; and
second interface means (UIF) performing the higher layer protocol related functions,
wherein the first interface means is physically separated from the second interface means to provide a functional separation of the line and higher layer protocol related functions.

3. The multiplexing system according to claim 2, characterized in that the first interface means comprises at least one line interface card (LIF) and the second interface means comprises at least one universal interface card (UIF), wherein all UIFs are of same type.

4. The multiplexing system according to claim 3,
characterized in that the UIF has at least two different kinds of interfaces, wherein a first interface of a first kind is used to transfer ATM-based cells and a second interface of a second kind is used to transfer non-ATM-based data.

5. The multiplexing system according to claim 3,
characterized in that the UIF is capable of balancing processing load on a traffic-driven basis.

6. The multiplexing system according to claim 4 or 5, characterized in that the first interface provides a data path and the second interface provides a control path to a cell-based LIF, and that the second interface provides a data path and a control path to a non-cell-based LIF.

7. The multiplexing system according to any of claims 4 to 6, characterized in that the first interface is a Universal Test and Operation Interface for ATM (UTOPIA) interface and the second interface is a Peripheral Component Interconnect (PCI) interface.

8. The multiplexing system according to any of claims 2-7, characterized in that the second interface means autoconfigures the first interface means when the first interface means is connected to the second interface means.

9. The multiplexing system according to claim 8,
characterized in that at least one LIF is capable of interfacing with one of T1 lines, T3 lines, Asymmetric Digital Subscriber Line (ADSL) lines, High Speed Digital Subscriber Line (HDSL) lines, ADSL-lite lines, Ethernet lines, Radio lines, and ATM lines.

10. A multiplexing system for accessing an ATM network (210), characterized by:
an ATM cell bus (102);
a plurality of universal interface cards (UIFs) connected to the ATM cell bus, the UIFs performing higher layer protocol related functions;
a plurality of line interface cards (LIFs) detachably connected to the plurality of UIFs, the LIFs performing line related functions, wherein more than one of the LIFs may be connected to one of the plurality of UIFs;
a function server (209) connected to the ATM cell bus;
a cell multiplexer (104) connecting the ATM cell bus with the ATM network; and
an element management system card (103) connected to the ATM bus,
wherein the UIFs and the LIFs are used in multiplexing and the element management system card controls the multiplexing.

11. The multiplexing system according to claim 10, characterized in that a permanent virtual channel (PVC) is set up between the element management system card and each of the UIFs.

12. The multiplexing system according to claim 10 or 11, characterized in that the element management system card comprises a CORBA-compliant interface.

13. The multiplexing system according to claim 12, characterized in that the element management system card comprises a CORBA-based PVC setup with remote network servers and databases.

14. In a combination of a universal interface card (UIF) and at least one line interface card (LIF) which are used in multiplexing, wherein the LIF performs line related functions and the UIF performs higher layer protocol related functions,
a UIF characterized by:
interface means for detachably connecting the LIF thereto;
control means for auto-configuring the LIF by communicating with the LIF through the interface means when the LIF is plugged into the UIF.

15. The UIF according to claim 11, wherein the control means receives from the LIF a set of information including a line protocol on the LIF, a data path which is one of cell-based path and non-cell-based path, and a protocol stack which needs to be downloaded for using the LIF.

16. A control method for a multiplexing system comprising:
at least one line interface card (LIF) performing line related functions; and
at least one universal interface card (UIF) performing higher layer protocol related functions,
wherein the LIF is physically separated from the UIF to provide a functional separation of the line and higher layer protocol related functions,
the control method characterized by the steps of:
a) registering the LIF in the UIF to which the LIF is connected; and
b) downloading configuration information from the UIF to the LIF to make the LIF operational.

17. The control method according to claim 16, further comprising the steps of:
c) completing activation of a channel to a remote host at the LIF;
d) starting a loopback test between the LIF and the remote host; and
e) collecting statistics information measured at the LIF.

18. A control method for a multiplexing system comprising:
at least one line interface card (LIF) performing line related functions; and
at least one universal interface card (UIF) performing higher layer protocol related functions,
wherein the LIF is physically separated from the UIF to provide a functional separation of the line and higher layer protocol related functions,
the control method characterized by the steps of:
a) sending a first message from the LIF to the UIF at first; and
b) sending a second message from the UIF to the LIF to make the LIF operational,
wherein all of the messages have a same format, each message having a header and contents, the header having an LIF identifier and message type, the contents having a number of data fields, exact number of data fields depends on the header.

19. The control method according to claim 18, wherein the first message is a Hello message conveying the LIF identifier and enabling the UIF to download appropriate configuration files.

20. The control method according to claim 18 or 19, wherein the second message is a Configuration message containing provisioning information which is loaded onto the LIF to set the LIF and the UIF to be operable.

21. The control method according to claim 18, further comprising the steps of:
c) completing activation of a channel to a remote host at the LIF;
d) sending a third message from the LIF to the UIF on successful completion of the channel activation;
e) sending a fourth message from the UIF to the LIF, wherein the UIF uses the fourth message to request information of the remote host; and
f) sending a fifth message from the LIF to the UIF, the fifth message conveying the information of the remote host,
wherein all of the messages have a same format, each message having a header and contents, the header having an LIF identifier and message type, the contents having a number of data fields, exact number of data fields depends on the header.

22. The control method according to claim 21, wherein the third message is a line stabilization message, the fourth message is an identify remote message having no data except line number, and the fifth message is an identify remote acknowledgement message.

23. The control method according to claim 21, further comprising the steps of:
g) sending a sixth message from the UIF to the LIF to set up a loopback test;
h) sending a seventh message from the UIF to the LIF wherein the UIF requests collected statistics measured by the LIF; and
i) sending an eighth message from the LIF to the UIF wherein requested statistics information is provided to the UIF.
